# FASCICULE DE BREVET EUROPEEN

(11) **EP 3 690 375 B1**
(45) Date de publication et mention de la délivrance du brevet: **25.08.2021**
(21) Numéro de dépôt: 20154327.9
(22) Date de dépôt: 29.01.2020
(51) Int. Cl.: F28D 20/00

(54) **REFROIDISSEMENT D'AIR DIURNE AU MOYEN D'UN DISPOSITIF DE STOCKAGE DE FROID ET D'HUMIDITÉ D'AIR NOCTURNE**
KÜHLUNG DER TAGESLUFT MITHILFE EINER SPEICHERVORRICHTUNG DER NACHTLUFTKÄLTE UND -FEUCHTIGKEIT
COOLING OF DAYTIME AIR BY MEANS OF A DEVICE FOR STORING COLD AND NIGHT-TIME AIR HUMIDITY

(30) Priorité: 04.02.2019 FR 1901050
(43) Date de publication de la demande: 05.08.2020
(73) Titulaire: Commissariat à l'énergie atomique et aux énergies alternatives, 75015 Paris (FR)
(72) Inventeur: BRUCH, Arnaud, 38054 GRENOBLE CEDEX 09 (FR); LARGILLER, Grégory, 38054 GRENOBLE CEDEX 09 (FR); ROUGE, Sylvie, 38054 GRENOBLE CEDEX 09 (FR); SORIANO, Olivier, 38054 GRENOBLE CEDEX 09 (FR)
(74) Mandataire: Brevalex

(56) Documents cités:
- WO-A1-2015/186100
- FR-A1- 3 041 088
- US-A1- 2009 072 537
- US-A1- 2012 006 049

## Description

**DOMAINE TECHNIQUE ET ÉTAT DE LA TECHNIQUE ANTÉRIEURE** La présente invention a trait au domaine des dispositifs de refroidissement pour systèmes de conversion chaleur/électricité telles que les centrales situées en milieu chaud et aride, en particulier les centrales solaires à concentration. Elle concerne la mise en œuvre d'un dispositif de refroidissement amélioré doté d'un réservoir de stockage adapté pour refroidir l'air envoyé vers un échangeur thermique de type aéroréfrigérant ou aérocondenseur.

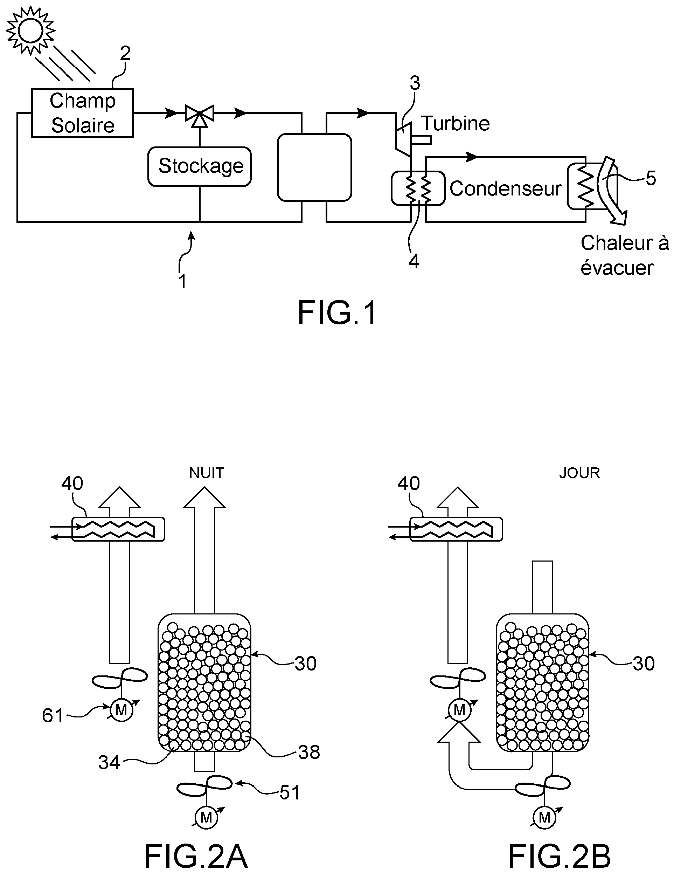

Dans une centrale solaire 1 à concentration conventionnelle telle qu'illustrée d'une manière schématique sur la figure 1, le champ solaire 2 permet de chauffer un fluide caloporteur qui peut être envoyé dans un échangeur de chaleur pour produire de la vapeur.

Cette vapeur est détendue dans une turbine 3 pour produire de l'électricité. En sortie de turbine 3, la vapeur est typiquement condensée par un condenseur 4. Les centrales thermodynamiques convertissant la chaleur en électricité requièrent une source froide 5 permettant d'évacuer la puissance résiduelle non convertie. Le rendement de la centrale est d'autant plus élevé que cette source froide présente une température basse.

Dans les centrales thermodynamiques de taille importante l'eau est communément utilisée comme source froide. Cependant, dans des régions arides d'autres solutions de refroidissement doivent être envisagées.

Le document WO2015186100 divulgue un dispositif selon le préambule de la revendication 1 et présente une source froide pour centrale thermodynamique formée d'un réservoir enterré rempli d'un lit de roches qui, la nuit, emmagasine la fraicheur de l'air nocturne et la journée peut permettre de refroidir de l'air destiné à un condenseur de type aérocondenseur sec, qui fonctionne donc sans eau et est situé à distance au-dessus du réservoir. Le refroidissement de l'air utilisé par l'aérocondenseur est opéré le jour, notamment lorsque la température de l'air ambiant dépasse un certain seuil, en dirigeant l'air ambiant vers le lit de roches qui a été refroidi la nuit.

Il se pose le problème d'améliorer l'efficacité d'un tel dispositif de refroidissement.

### EXPOSÉ DE L'INVENTION

Selon un aspect, la présente invention concerne un dispositif pour le refroidissement d'air à destination d'un échangeur thermique, ce dispositif comprenant une structure, en particulier une structure de stockage, dotée d'un matériau sensible et configurée de sorte à pouvoir être mise en communication avec l'extérieur pour pouvoir permettre une circulation de l'air ambiant au travers de ladite structure et réaliser un échange thermique avec ledit matériau sensible contenu dans ladite structure, le matériau sensible étant en particulier adapté pour stocker le froid de l'air ambiant lors d'heures où la température extérieure de l'air ambiant est la plus froide, et de sorte à refroidir l'air ambiant lors d'heures où la température extérieure de l'air ambiant est la plus chaude, la structure comprenant en outre un matériau adsorbant l'humidité, pour piéger l'humidité de l'air extérieur mis en circulation et traversant la structure. Le matériau adsorbant l'humidité est adapté pour adsorber l'humidité lors d'heures où la température extérieure de l'air ambiant est la plus froide et l'humidité relative de l'air ambiant la plus élevée, et est adapté pour désorber l'eau dans une gamme de températures et une gamme d'humidité relative, de sorte à désorber l'eau lors d'heures où la température extérieure de l'air ambiant est la plus chaude.

La gamme de températures dans laquelle le matériau adsorbant peut désorber est comprise dans une gamme de températures extérieures les plus chaudes d'un site dans laquelle se situe l'installation. On vise typiquement des sites dans lesquelles l'humidité relative est inférieure à 50%. De préférence, le matériau adsorbant étant un matériau adapté pour désorber l'eau au moins partiellement lorsque la température est inférieure 50°C.

Une telle structure présente pour avantage de former une source de refroidissement sans qu'aucune consommation d'eau ne soit nécessaire et permet d'améliorer le refroidissement par exploitation combinée d'échanges convectifs avec le matériau sensible et de désorption lorsque le matériau adsorbant libère l'humidité de l'air qu'il a emmagasiné.

La co-intégration du matériau sensible et du matériau adsorbant pourrait paraitre au premier abord inadaptée pour l'Homme du Métier dans la mesure où l'adsorption est un phénomène exothermique et où le stockage d'humidité au sein du matériau adsorbant conduit à un réchauffement de celui-ci. Toutefois la structure permet d'arriver à stocker du froid et de l'humidité, par exemple par un découplage temporel des stockages d'humidité et de fraicheur au cours de la nuit, afin de permettre un refroidissement plus important de l'air chaud en période diurne. L'effet cumulé du matériau sensible et du matériau adsorbant au sein de la même structure est exploitée lors de la journée, lorsque de l'air chaud et sec est envoyé dans le stockage pour y être refroidi le phénomène endothermique de désorption conduit à un refroidissement de l'air et donc à un ralentissement de la réaction de désorption, la désorption étant d'autant plus efficace que la température est élevée.

La structure définie plus haut est en particulier utilisée comme source froide pour une centrale thermodynamique. L'échangeur vers lequel l'air refroidi est destiné peut être en particulier un échangeur d'installation de conversion de chaleur en électricité.

Selon un exemple de réalisation particulier, cette installation de conversion de chaleur en électricité peut être une centrale solaire telle qu'une centrale solaire à concentration et l'échangeur peut alors être un condenseur de cycle de turbine à vapeur.

Avantageusement, le matériau adsorbant peut être à base de zéolithe ou de gel de silice, matériaux qui présentent des propriétés d'adsorption/désorption à des températures adaptées au domaine d'application de l'invention et qui possèdent, en outre, de bonnes capacités de sorption.

Le matériau sensible peut quant à lui être un matériau de préférence peu onéreux tel que de la brique, ou sous forme de cailloux, de graviers, de roche, ou de déchets industriels par exemple métalliques.

Selon un premier mode de réalisation particulier, la structure peut contenir le matériau sensible sous forme de blocs de matière, le matériau adsorbant étant alors sous forme d'un revêtement enrobant lesdits blocs de matière.

Avantageusement, on prévoit un revêtement d'épaisseur comprise entre 10 µm et 1 mm en particulier pour des blocs de matière de dimension comprise entre 1 et 10 cm, en particulier pour un agencement en lit tassé.

Selon un autre mode de réalisation de la structure, le matériau sensible peut être est sous forme de blocs, tandis que le matériau adsorbant peut être sous forme de grains disposés entre les blocs de matériau sensible.

Avantageusement, on prévoit des blocs de matériau sensible de dimension qui peut être comprise entre 1 et 10 cm, et des grains de matériau adsorbant de dimension qui peut être comprise entre 1 mm et 1 cm.

Selon un autre mode de réalisation de la structure, cette dernière peut contenir au moins une première couche formée de grains de matériau adsorbant et au moins une deuxième couche formée de blocs de matériau sensible.

Dans ce cas, avantageusement, la première couche et la deuxième couche sont séparées par une structure de séparation ajourée, telle qu'une grille.

La structure peut être formée d'un amas agencé à même le sol ou avantageusement peut se présenter sous forme d'un réservoir. Selon un mode de réalisation particulier, le réservoir est disposé sur le sol. Un mode de réalisation particulier prévoir d'intégrer le réservoir dans le sol, par exemple dans au moins une fosse agencée dans le sol, communicant avec l'extérieur par le biais d'au moins un conduit.

La structure peut être en particulier susceptible d'adopter au moins une position ouverte dans laquelle la structure est mise en communication avec l'extérieur et une position dans laquelle elle forme une enceinte fermée et est isolée de l'extérieur.

La structure peut être en particulier maintenue ouverte pendant la nuit et pendant le jour peut-être alternativement maintenu fermée puis ouverte en fonction des températures extérieures et/ou de l'heure de la journée.

Dans ce cas, la structure peut être avantageusement intégrée à un dispositif doté de moyens de commande de l'ouverture et de la fermeture de la structure en fonction d'un paramètre préalablement défini telle que l'heure de la journée ou la température extérieure en journée par exemple.

Selon un autre aspect, la présente demande concerne une utilisation d'un dispositif tel que défini plus haut, dans lequel la structure est configurée de sorte à adopter au moins une position ouverte et au moins une position fermée, l'ouverture et la fermeture de la structure étant commandées en fonction de paramètres préalablement définis, tel que par exemple, un asservissement sur la température extérieure, en journée, ou l'heure de la journée.

Selon un autre aspect, la présente invention concerne un système de refroidissement comprenant un dispositif tel que défini plus haut et un échangeur thermique en particulier de type aéroréfrigérant ou aérocondenseur sec apte à recevoir en entrée de l'air en provenance de la structure et ayant traversé ce dernier.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
La Figure 1 sert à illustrer de manière schématique différentes parties d'une centrale solaire thermodynamique (CSP) susceptible d'intégrer un dispositif tel que mis en œuvre suivant l'invention ;
Les Figures 2A-2B servent à illustrer un principe de fonctionnement d'un dispositif pour le refroidissement d'air destiné à un échangeur, la structure étant amenée à être traversée par un flux d'air et contenant à la fois un matériau sensible adapté aux échanges de chaleur avec l'air et un matériau adsorbant d'humidité et adapté pour adsorber et désorber cette humidité dans des gammes de températures donnée ;
La Figure 3 montre un exemple de réalisation particulier de la structure dans une fosse creusée dans le sol ;
La Figure 4 sert à illustrer un exemple d'agencement particulier des matériaux dans la structure, le matériau sensible étant enrobé par le matériau adsorbant d'humidité ;
La Figure 5 sert à illustrer un autre exemple d'agencement des matériaux dans la structure, ce dernier contenant un mélange de blocs de matériau sensible et de grains de matériau adsorbant d'humidité ;
La Figure 6 sert à illustrer un autre exemple d'agencement de matériaux, la structure contenant une superposition de couches comportant au moins une couche de blocs de matériau sensible et au moins une couche de grains de matériau adsorbant d'humidité ;
Les Figures 7A-7B servent à illustrer des exemples d'isothermes de sorption d'un gel de silice.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

En outre, dans la description ci-après, des termes qui dépendent de l'orientation, tels que « vertical », « horizontal », « dessus », « sous », etc. d'une structure s'appliquent en considérant que la structure est orientée de la façon illustrée sur les figures.

### EXPOSÉ DÉTAILLÉ DE MODES DE RÉALISATION PARTICULIERS

Par la suite, même si la description fait référence à un dispositif de stockage thermique dans lequel la structure 30 est un réservoir 30, l'invention est transposable à toute autre structure 30 permettant de contenir le matériau sensible 34 et le matériau adsorbant l'humidité 38.

On se réfère à présent aux figures 2A-2B sur lesquelles on peut voir un réservoir 30 de stockage thermique amené à réaliser un stockage conjointement du froid de l'air ambiant et d'humidité nocturne afin de réaliser une source froide apte à rafraichir, en particulier en journée, de l'air à destination d'un échangeur thermique, dans cet exemple un aéroréfrigérant 40, en particulier un aérocondenseur pour une installation amenée à convertir la chaleur en électricité telle que par exemple une centrale solaire à concentration (CSP).

On prévoit une implantation du réservoir 30 typiquement dans une région à fort ensoleillement et présentant des températures élevées en journée, au moins supérieures à 20°C, typiquement supérieures à 30°C et qui peuvent atteindre au moins 40°C voire 50°C. Le réservoir 30 est par exemple disposé dans une région dont la température extérieure varie entre 15°C et 50°C et en particulier dont l'écart de température diurne et nocturne est d'au moins 10°C et de préférence d'au moins 25°C. Le réservoir 30 s'adapte en particulier à une région où la ressource en eau est rare ou inexistante. Typiquement, le réservoir 30 est implanté dans une région dans laquelle l'humidité relative est inférieure à 50% pendant la nuit.

Le réservoir 30 peut être sous forme d'une structure réalisant une enceinte qui peut être maintenue en position fermée dans laquelle un échange d'air avec l'extérieur est empêché et au moins une position ouverte dans laquelle un flux d'air peut pénétrer dans le réservoir, le traverser puis en ressortir. Le réservoir peut être ainsi typiquement doté d'une ou plusieurs vannes. Le réservoir peut être également doté ou associé à des moyens de type pompe ou système de ventilation pour permettre de faire circuler un flux d'air de l'intérieur vers l'extérieur du réservoir et/ou de l'extérieur vers l'intérieur du réservoir 30. Avantageusement, on utilise un moyen mécanique, par exemple, un ventilateur, pour mettre l'air en mouvement et le faire circuler à travers le réservoir.

Le réservoir 30 contient un matériau de remplissage occupant partiellement le volume du réservoir 30 et laissant des espaces ou interstices pour permettre une circulation d'air dans et à travers le réservoir 30. Le matériau de remplissage 30 est formé d'un matériau 34 dit « sensible » permettant de favoriser les échanges thermiques avec l'air, principalement par convection avec de l'air mis en circulation à travers le réservoir 30.

Le matériau 34 est typiquement prévu sous forme d'un ensemble de blocs formant un lit de blocs, les dimensions des blocs ainsi que leur agencement favorisant les échanges de chaleur avec de l'air mis en circulation à travers le réservoir 30 tout en limitant les pertes de pression afin de limiter l'énergie nécessaire à la mise en circulation de l'air. De manière générale, on envisage un matériau sensible 34 peu cher et disponible, tel que de la roche, des graviers, ou des cailloux, par exemple sous forme d'un lit tassé. D'autres matériaux sensibles sous forme d'un amas de blocs tels que des rebuts ou des déchets d'industrie, par exemple métalliques, ou de la brique peuvent également convenir. On choisira, avantageusement, un matériau peu couteux, et/ou ayant une densité de stockage la plus élevée possible.

Le réservoir 30 a ici la particularité de contenir en outre un matériau 38 supplémentaire, adsorbant d'eau et adapté pour adsorber la vapeur d'eau contenue dans l'air ambiant qui est mis en circulation à travers le réservoir 30, en particulier aux instants où les températures extérieures sont les plus froides.

L'air nocturne étant typiquement à la fois plus froid mais aussi plus humide en termes d'humidité relative que l'air diurne, le réservoir 30 permet, par l'intermédiaire de la combinaison de ces matériaux 34, 38 de stocker le froid ambiant et d'adsorber une fraction de l'humidité contenue dans cet air. Le réservoir 30 est ainsi typiquement disposé dans une région avec une humidité relative en journée typiquement inférieure à 50% et de nuit typiquement supérieure à 10%.

On choisit le matériau adsorbant 38 utilisé pour le remplissage du réservoir 30 en fonction de l'hygrométrie et des températures en journée et en nuit du site dans lequel le réservoir est disposé.

Un matériau adsorbant est typiquement défini :
i) par ses isothermes de sorption pour différentes températures,
ii) par son enthalpie de sorption,
iii) par sa capacité maximale de sorption (typiquement exprimée en kg eau / kg de sorbant).

Dans le cas présent, le choix du matériau adsorbant est principalement dicté par les critères i) et iii).

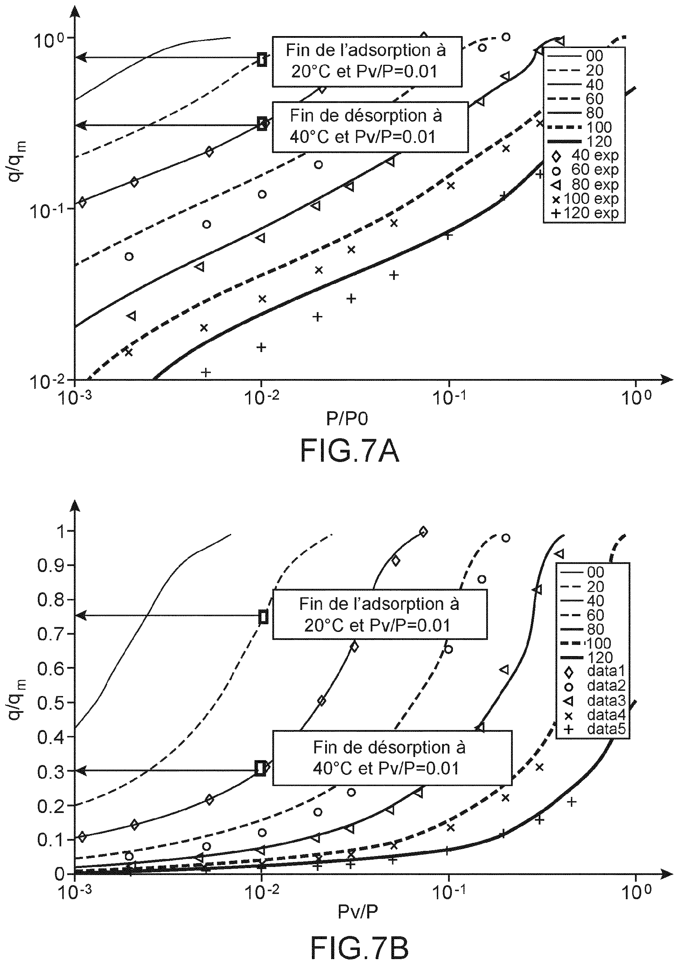

Le matériau 38 est en particulier choisi en fonction des températures extérieures en journée du site dans lequel se trouvent l'installation et le réservoir 30 et qui peut être en particulier comprise entre 20°C et 50°C. On considère par ailleurs avantageusement un site pour lequel la fraction molaire de vapeur varie peu et reste typiquement inférieure à 50% d'humidité relative, même la nuit. Dans le cas présent, le matériau 38 choisi a des propriétés d'adsorption en eau de l'ordre d'au moins 20 % à 35 % de sa masse, sur une première gamme de température donnée, typiquement comprise entre 10°C et 30°C. Le matériau 38 est en outre un matériau choisi pour pouvoir désorber l'eau, au moins partiellement et de préférence de manière complète à une température inférieure à 50°C et qui peut être comprise entre 30°C et 50°C, par exemple entre 40°C et 50°C. Un exemple de réalisation particulier prévoit l'utilisation d'un gel de Silice dont les isothermes de sorption ont une allure telle que donnée sur les figures 7A-7B.

Sur ces figures, des points expérimentaux (points sous forme de symboles) et fonctions de corrélation (courbes reliant ces points) sont donnés en échelle semilog (figure 7A) et log (figure 7B)). En abscisse, le rapport P/P0 correspond à la fraction molaire de vapeur dans l'air tandis que la valeur en ordonnées est représentative d'un rapport q/qm, q étant l'humidité spécifique du sorbant et qm l'humidité maximale du sorbant. Quand la réaction de sorption est à l'équilibre, la teneur en humidité du sorbant est sur l'isotherme de température du sorbant pour la fraction molaire de vapeur dans l'air P/P0.

Sur les figures sont représentés deux points d'équilibre d'adsorption et de désorption pour un gel de silice. Selon cet exemple, la température varie entre 20°C et 40°C entre le jour et la nuit. La pression partielle réduite de vapeur Pv/P ne change pas (1^{E-2}). La masse d'eau normalisée stockée dans le sorbant varie de 0.3 à 0.75. Cette masse dépend de l'écart de température, du niveau Pv/P et de la forme des isothermes qui est caractéristique de chaque type de sorbant.

Selon un autre exemple, le matériau adsorbant peut être une zéolithe adaptée pour désorber l'eau à partir d'une température de l'ordre de 30°C lorsque l'humidité relative est de l'ordre de 10%. Il s'agit, par exemple, de la zéolithe Z05 commercialisée par la société Mitsubishi.

On choisit également de préférence un matériau 38 ayant une bonne capacité maximale de sorption, permettant de stocker une quantité d'eau importante dans peu de matériau sorbant. On choisira, typiquement, un matériau 38 ayant une capacité de sorption d'au moins 0,25 kg eau / kg de sorbant sec. Par exemple, un gel de silice de capacité de sorption de 0.315 kg eau / kg de sorbant sec peut être avantageusement employé.

Un principe de fonctionnement du réservoir 30 est le suivant : pendant la nuit (figure 2A), on effectue une « charge » du système de refroidissement pendant laquelle, de l'air ambiant froid et ayant une humidité relative élevée est mis en circulation à travers le réservoir 30. L'introduction de l'air et sa mise en circulation peuvent être favorisées à l'aide d'au moins un ventilateur 51. Lorsque le réservoir 30 est sous forme d'une enceinte, on place cette enceinte en position ouverte, par exemple en ouvrant une ou plusieurs vannes pour permettre l'admission d'air. Le matériau sensible 34 stocke alors le froid de l'air tandis que le matériau adsorbant 38 emmagasine une fraction de l'humidité de l'air. Lors de cette phase et s'il est en fonctionnement, l'aérocondenseur 40 peut être alimenté en entrée par de l'air nocturne, indépendamment du réservoir 30.

Durant la nuit, le stockage d'humidité est fait en premier, en début de nuit, ce qui conduit à un échauffement du lit. Durant cette phase, on cherche à stocker de l'humidité et le contrôle de la température du lit n'est pas un critère primordial. Une fois que l'adsorption est moins intense, l'air frais du petit matin (qui correspond à la période de température minimale durant la nuit) est introduit et passe dans le réservoir pour refroidir le lit. A la fin de la nuit, de l'humidité et du froid ont été stockés.

Pendant la journée (figure 2B), le réservoir 30 peut être maintenu tout d'abord dans une position fermée. Puis, lorsque cela s'avère nécessaire, par exemple lors que la température extérieure dépasse un seuil prédéterminé, par exemple de 20°C ou de 30°C, on met le réservoir en position ouverte de sorte à permettre une circulation d'un flux d'air ambiant, alors chaud et sec, à travers le réservoir 30, ce qui permet de refroidir ce flux par deux phénomènes conjoints : un échange convectif conventionnel avec le matériau sensible 34 et une désorption de l'eau contenue dans le matériau adsorbant 38. Ce phénomène de désorption étant endothermique, il permet de provoquer un refroidissement supplémentaire de l'air qui peut être utilisé pour alimenter l'aéroréfrigérant 40. Une augmentation du débit d'air d'un ventilateur 61 associé à l'aéoréfrigérant 40 n'est alors pas nécessaire.

Un système de commande d'ouverture/fermeture automatique peut par exemple être utilisé. Un système de commande d'ouverture et de fermeture du réservoir 30, en fonction d'un paramètre prédéfini, tel que l'heure de la journée ou la température extérieure peut être ainsi prévu. Par exemple, si la température extérieure en journée dépasse une certaine valeur définie préalablement, le système de stockage est activé pour refroidir l'air extérieur chaud. Il y a, par exemple, l'asservissement mécanique : lorsque la température extérieure est supérieure à une limite fixée, le système de stockage est utilisé, le système est mis en fonctionnement, les éventuels moyens de mise en circulation sont ouverts et mis en route.

Un tel réservoir permet de réaliser un refroidissement à faible coût de maintenance en raison de la robustesse du procédé de refroidissement, à faible coût énergétique en raison notamment de la faible perte de pression entre l'entrée et la sortie d'air du réservoir. On vise typiquement une perte de pression comprise entre 200 Pa et 500 Pa.

Un tel réservoir permet de prévoir un dimensionnement plus aisé de l'aéroréfrigérant ou aérocondenseur associé qui travaille alors sur une gamme de température extérieure et un débit d'air réduits. Un tel réservoir permet ainsi une augmentation des performances de la centrale et/ou diminution des coûts d'investissement par réduction de la taille de l'aéroréfrigérant utilisé, par rapport à un refroidissement sec conventionnel.

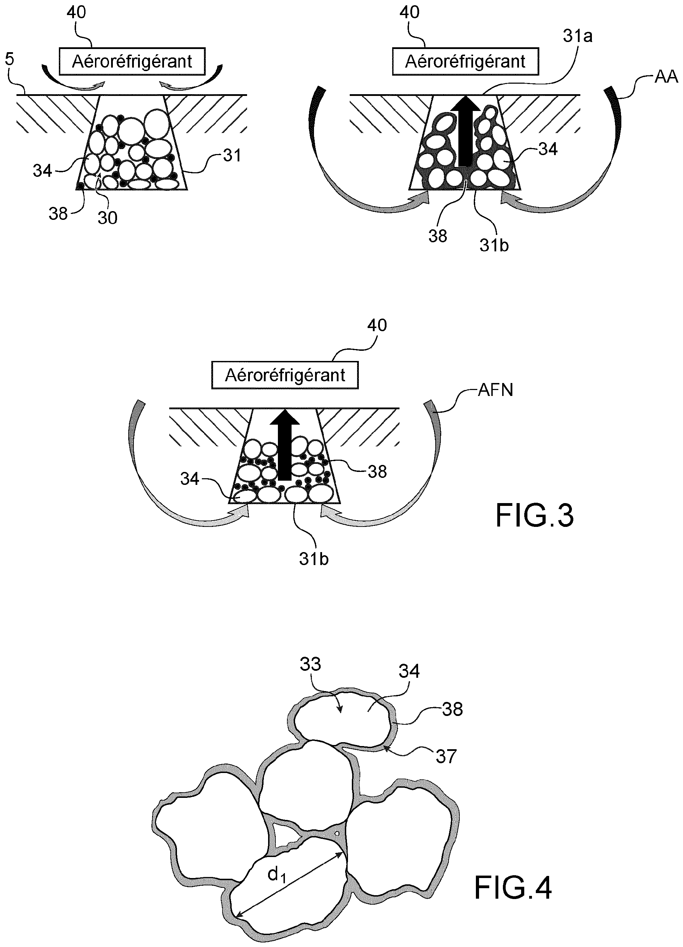

Selon un exemple de réalisation particulier illustré sur la figure 3, le réservoir 30 de stockage 30 permettant d'emmagasiner le froid et l'humidité de la nuit peut être formé dans une fosse 31 enterrée dans le sol S et située sous l'aéroréfrigérant 40. Dans l'exemple illustré, la forme de la fosse 31 est par exemple celle d'une pyramide tronquée avec une base 31a agencée dans le sol plus profondément que son sommet 31b, le sommet 31b ayant une section transversale plus faible que la base. La fosse 31 est susceptible d'être alimentée dans sa partie inférieure par de l'air extérieur, par exemple par le biais d'un conduit réalisé dans le sol à cet effet. Un tel réservoir a un faible coût de construction, sa construction est aisée, et son intégration est possible même sur des installations ou centrales déjà construites. La fosse 31 est également susceptible de rejeter un flux d'air frais vers l'extérieur. Avantageusement, on utilise le même sens de circulation de l'air le jour et la nuit, i.e. les mêmes conduits de circulation et les mêmes moyens de mise en circulation.

Différentes configurations d'agencement du matériau adsorbant 38 par rapport au matériau sensible 34 sont envisageables dans le réservoir 30.

Un mode de réalisation particulièrement avantageux, illustré sur la figure 4, prévoit un matériau sensible 34 sous forme de blocs 33 de matière enrobés par le matériau adsorbant 38. Le matériau adsorbant 38 se présente ainsi sous forme d'un revêtement 37 mince, d'épaisseur typiquement comprise entre 10 µm et 1 mm, par exemple de l'ordre de 100 µm autour de blocs 33. Les blocs 33 peuvent avoir un diamètre ou une plus grande dimension d1 par exemple de l'ordre de plusieurs centimètres ou dizaines de centimètres.

Dans cette configuration, on réalise avantageusement une co-intégration des fonctions de stockage du froid et de l'humidité au sein des blocs 33.

D'autre part, la mise en œuvre d'une fine couche superficielle adsorbante permet de favoriser les mécanismes d'adsorption et de désorption, et de rendre ces mécanismes à la fois plus efficaces et plus rapides. La co-intégration des deux matériaux 34, 38 sur un même élément permet d'obtenir une granulométrie plus uniforme entre les blocs 33 de remplissage que lorsque ces deux matériaux sont dissociés. Le fait d'avoir des blocs 33 de taille uniforme ou sensiblement uniforme permet de maitriser davantage les phénomènes de pertes de pression.

L'enrobage des blocs peut être réalisé par exemple par un procédé consistant à revêtir les blocs par une suspension d'adsorbant dans un polymère fluide. Les blocs préalablement nettoyés sont revêtus par trempage dans l'adsorbant (procédé de "dip coating") ou grâce à la l'utilisation d'un spray (procédé de "spray coating"). Une fois revêtus, les blocs seront ensuite séchés ou polymérisés selon la nature de la suspension utilisée.

Il est également possible de prévoir un remplissage du réservoir 30 avec un matériau sensible 34 et un matériau adsorbant 38 dissociés.

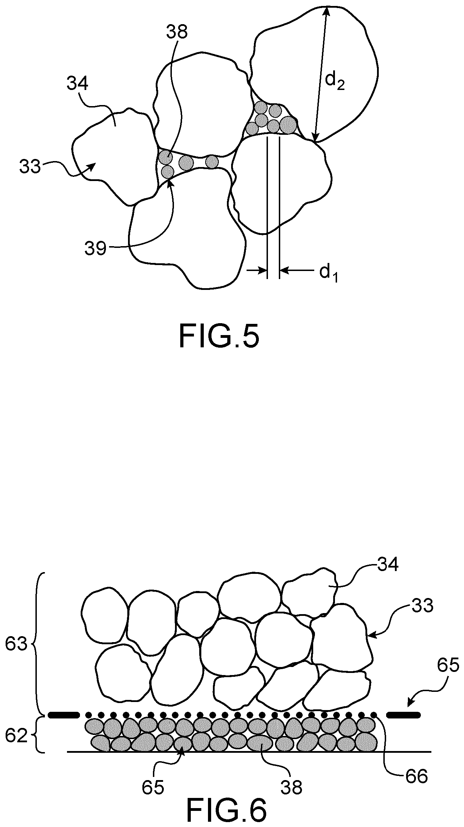

Dans l'exemple de réalisation particulier illustré sur la figure 5, le réservoir 30 comporte ainsi un mélange de blocs 33 de matériau sensible 34, et de blocs ou grains 39 de matériau adsorbant 38. Les grains 39 ont typiquement une dimension maximale d2 plus faible que celle d1 desdits blocs 33 de matériau sensible 34 ainsi qu'un volume plus faible que celui des blocs 33. Par exemple, les grains 39 de matériau adsorbant ont une dimension maximale d2 prévue entre 10 µm et 1 mm, par exemple de l'ordre de 100 µm. Les grains 39 de matériau adsorbant peuvent se loger dans des espaces entre les blocs de matériau sensible 34 et permettre d'obtenir une compacité globale du matériau de remplissage plus importante.

Une autre possibilité prévoit de réaliser des strates ou couches alternées de matériau adsorbant 38 et de matériau sensible 34. Ainsi dans l'exemple de réalisation particulier illustré sur la figure 6, on prévoit un remplissage du réservoir 30 avec au moins une couche ou strate 62 formée de grains 39 de matériau adsorbant 38 surmontée d'une autre couche ou strate 63 formée de blocs 33 de matériau sensible 34.

Afin de réaliser une séparation entre les différentes strates ou couches tout en permettant un passage d'un flux d'air, une structure de séparation ajourée peut être prévue. Dans l'exemple de réalisation illustré, cette structure de séparation peut être par exemple une grille 65 comportant des ouvertures 66 de dimension suffisamment faible pour permettre d'empêcher un passage des blocs 33 de matériau sensible 34 et/ou des grains 39 de matériau adsorbant 38.

Un tel agencement permet une maitrise des pertes de pression. Le nombre de strates, leur agencement, en particulier par rapport à l'entrée d'air du réservoir 30 peuvent être modulés en fonction de l'efficacité de refroidissement et des contraintes de pertes de charges requises. On peut envisager par exemple un réservoir rempli de strates horizontales ou de strates verticales.

En variante des agencements décrits précédemment, on peut prévoir un réservoir doté de blocs de matériau sensible 34 et de matériau adsorbant 38 agencé sur le sol, voire une structure formée d'un amas de blocs disposés à même le sol.

Un exemple particulier de fonctionnement d'un module ou d'une structure contenant les matériaux 34, 38 et comprenant, comme le réservoir de la figure 5, un mélange de blocs de matériau sensible 34 et de blocs de matériau adsorbant 38 va à présent être donné.

On considère une structure implantée sur un site dans lequel la température de l'air en fin de nuit, est par exemple de l'ordre de 20°C et de l'ordre de 40% d'humidité relative, soit de 7 g eau / kg air sec et une température maximale Tmax en fin de journée de l'ordre de 45°C avec une même teneur en eau que l'air diurne de l'ordre de 13%. Vers 40-45°C la structure a une teneur en eau minimale. Dès que le soleil se couche, la température commence à baisser. En dessous d'un seuil compris entre 20 et 45°C, on alimente en air la structure par le bas. L'adsorption d'humidité à l'aide du matériau 38 va entrainer une augmentation de température dans le lit de matériau sensible 34 ainsi que de l'air en sortie, l'air de début de nuit va servir à évacuer la chaleur parasite d'adsorption.

Progressivement au cours de la nuit, l'adsorption en eau va diminuer et la structure commence à stocker du froid. A la fin de la nuit, la structure de stockage est chargée en humidité et en froid, vers 20°C. Dès que le soleil se lève, la température de l'air commence à augmenter. Dès que cette température atteint un seuil compris entre 20 et 45°C, la structure est alimentée par de l'air diurne chaud. Le refroidissement de l'air ambiant chaud et sec par convection et désorption permet de diminuer la température de l'air en sortie de la structure pendant une longue période.

## Revendications

1. Dispositif pour le refroidissement d'air à destination d'un échangeur thermique, en particulier pour une installation de conversion de chaleur en électricité, le dispositif comprenant une structure (30) dotée d'un matériau sensible (34) et configurée de sorte à pouvoir être mise en communication avec l'extérieur pour pouvoir permettre en circulation de l'air ambiant au travers le matériau sensible et réaliser un échange thermique avec le matériau sensible, **caractérisé en ce que**
la structure (30) comprenant en outre un matériau adsorbant (38) l'humidité, pour piéger l'humidité de l'air extérieur mis en circulation et traversant la structure, le matériau adsorbant (38) étant un matériau adapté pour désorber l'eau à une température inférieure à 50°C, pour une humidité relative inférieure à 50%.

2. Dispositif selon la revendication 1, dans lequel le matériau sensible (34) est sous forme de blocs (33) de matière, le matériau adsorbant (38) étant sous forme d'un revêtement (37) enrobant lesdits blocs (33) de matière.

3. Dispositif selon la revendication 1, dans lequel le matériau sensible (34) est sous forme de blocs (33), le matériau adsorbant (38) étant sous forme de grains (39) disposés entre les blocs (33) de matériau sensible (34).

4. Dispositif selon la revendication 1, dans lequel la structure (30) comporte au moins une première couche (62) formée de grains (39) de matériau adsorbant (38) et au moins une deuxième couche (63) formée de blocs (38) de matériau sensible (34).

5. Dispositif selon la revendication 4, dans lequel la première couche (62) et la deuxième couche (63) sont séparées par une structure de séparation ajourée, telle qu'une grille (65).

6. Dispositif selon l'une des revendications précédentes, le matériau adsorbant (38) étant à base de zéolithe ou de gel de silice.

7. Dispositif selon l'une des revendications 1 à 6, ladite structure (30) étant un réservoir, le réservoir étant disposé sur le sol.

8. Dispositif selon l'une des revendications 1 à 6, ladite structure (30) étant un réservoir, le réservoir étant dans une fosse (31) agencée dans le sol.

9. Utilisation d'un dispositif selon l'une des revendications 1 à 8, dans lequel la structure (30), est configuré de sorte à adopter au moins une position ouverte dans laquelle la structure (30) est mise en communication avec l'extérieur et au moins une position fermée dans laquelle la structure (30) est isolée de l'extérieur, l'ouverture et la fermeture de la structure (30) étant commandés en fonction de la température extérieure en journée.

10. Système de refroidissement comprenant :
- un dispositif selon l'une des revendications 1 à 8,
- un dispositif aéroréfrigérent (40) de centrale solaire.

## Patentansprüche

1. Vorrichtung zur Kühlung von Luft für einen Wärmetauscher, insbesondere für eine Anlage zur Umwandlung von Wärme in Elektrizität, wobei die Vorrichtung eine Struktur (30) umfasst, die mit einem empfindlichen Material (34) ausgestattet und derart konfiguriert ist, dass sie in Kommunikation mit der Umgebung gebracht werden kann, um eine Zirkulation der Umgebungsluft durch das empfindliche Material hindurch zu ermöglichen und einen Wärmeaustausch mit dem empfindlichen Material zu realisieren, **dadurch gekennzeichnet, dass**
die Struktur (30) ferner ein feuchtigkeitsadsorbierendes Material (38) umfasst, um die Feuchtigkeit der in Zirkulation versetzten und die Struktur durchquerenden Umgebungsluft einzufangen, wobei das adsorbierende Material (38) ein Material ist, das dazu ausgelegt ist, Wasser bei einer Temperatur von weniger als 50° C für eine relative Feuchtigkeit von weniger als 50% zu desorbieren.

2. Vorrichtung nach Anspruch 1, bei der das empfindliche Material (34) in Form von Materialblöcken (33) vorliegt, wobei das adsorbierende Material (38) in Form einer Beschichtung (37) vorliegt, die die Materialblöcke (33) umhüllt.

3. Vorrichtung nach Anspruch 1, bei der das empfindliche Material (34) in Form von Blöcken (33) vorliegt, wobei das adsorbierende Material (38) in Form von Körnern (39) vorliegt, die zwischen den Blöcken (33) aus empfindlichen Material (34) angeordnet sind.

4. Vorrichtung nach Anspruch 1, bei der die Struktur (30) wenigstens eine erste Schicht (62) umfasst, die aus Körnern (39) aus adsorbierendem Material (38) gebildet ist, und wenigstens eine zweite Schicht (63), die aus Blöcken (38) aus empfindlichem Material (34) gebildet ist.

5. Vorrichtung nach Anspruch 4, bei der die erste Schicht (62) und die zweite Schicht (63) durch eine durchbrochene Trennstruktur getrennt sind, beispielsweise ein Gitter (65).

6. Vorrichtung nach einem der vorhergehenden Ansprüche, wobei das adsorbierende Material (38) auf Basis von Zeolith oder von Silicagel ist.

7. Vorrichtung nach einem der Ansprüche 1 bis 6, wobei die Struktur (30) ein Behälter ist, wobei der Behälter auf dem Boden angeordnet ist.

8. Vorrichtung nach einem der Ansprüche 1 bis 6, wobei die Struktur (30) ein Behälter ist, wobei der Behälter in einem Graben (31) ist, der im Boden vorgesehen ist.

9. Verwendung einer Vorrichtung nach einem der Ansprüche 1 bis 8, wobei die Struktur (30) derart konfiguriert ist, dass sie wenigstens eine offene Position annimmt, in der die Struktur (30) in Kommunikation mit der Umgebung gebracht ist, und wenigstens eine geschlossene Position, in der die Struktur (30) von der Umgebung isoliert ist, wobei das Öffnen und das Schließen der Struktur (30) als Funktion der Außentemperatur tagsüber gesteuert werden.

10. Kühlsystem, umfassend:
- eine Vorrichtung nach einem der Ansprüche 1 bis 8,
- eine Luftkühlungsvorrichtung (40) einer Solarzentrale.

## Claims

1. A device for cooling air to a heat exchanger, in particular for a facility for converting heat into electricity, the device comprising a structure (30) provided with a sensitive material (34) and configured so as to be able to be communicated with the outside in order to circulate ambient air through the sensitive material and perform heat exchange with the sensitive material, **characterised in that**
the structure (30) further comprising a humidity adsorbing material (38), to trap humidity of external air circulated and passing through the structure, the adsorbing material (38) being a material adapted to desorb water at a temperature lower than 50°C, for a relative humidity lower than 50%.

2. The device according to claim 1, wherein the sensitive material (34) is in the form of blocks (33) of material, the adsorbing material (38) being in the form of a coating (37) covering said blocks (33) of material.

3. The device according to claim 1, wherein the sensitive material (34) is in the form of blocks (33), the adsorbing material (38) being in the form of grains (39) disposed between the blocks (33) of sensitive material (34).

4. The device according to claim 1, wherein the structure (30) includes at least one first layer (62) formed by grains (39) of adsorbing material (38) and at least one second layer (63) formed by blocks (38) of sensitive material (34).

5. The device according to claim 4, wherein the first layer (62) and the second layer (63) are separated by an openwork separation structure, such as a grid (65).

6. The device according to one of the preceding claims, the adsorbing material (38) being zeolite-or silica gel-based.

7. The device according to one of claims 1 to 6, said structure (30) being a tank, the tank being disposed on the ground.

8. The device according to one of claims 1 to 6, said structure (30) being a tank, the tank being in a pit (31) arranged in the ground.

9. A use of a device according to one of claims 1 to 8, wherein the structure (30), is configured so as to assume at least one open position in which the structure (30) is communicated with the outside and at least one closed position in which the structure (30) is isolated from the outside, opening and closing the structure (30) being controlled depending on the external temperature during daytime.

10. A cooling system comprising:
- a device according to one of claims 1 to 8,
- an air-cooling device (40) for a solar powerplant.
